# EUROPÄISCHE PATENTANMELDUNG

(11) **EP 1 043 425 A1**
(43) Veröffentlichungstag der Anmeldung: **11.10.2000**
(21) Anmeldenummer: 00107637.1
(22) Anmeldetag: 08.04.2000
(51) Int. Cl.: C25B 1/10, C25B 9/00

(54) **Hydrolyseur**

(30) Priorität: 10.04.1999 DE 19916240
(71) Anmelder: PILLER-GmbH, 37520 Osterode am Harz (DE)
(72) Erfinder: Ruthrof, Klaus, 91126 Schwabach (DE)
(74) Vertreter: Patentanwälte Rehberg + Hüppe

(57) **Zusammenfassung**

Ein Hydrolyseur (1) weist eine zentrale Polymermembran (2), die Polymermembran (2) beidseitig bedeckende Diffuserschichten (3, 4), die Diffuserschichten (3, 4) rückwärtig abstützende Flächenelektroden (5, 6) mit Durchbrechungen (7), mindestens ein Wasserreservoir (9), aus dem Wasser durch eine der Diffuserschichten (3) an die Polymermembran (2) gelangt, und eine Spannungsquelle (8), mit der eine Spannung zwischen den beiden Flächenelektroden (5, 6) aufbringbar ist, wobei sich die eine Flächenelektrode (5) auf einem niedrigeren elektrischen Potential als die andere Flächenelektrode (6) befindet, auf. Das mindestens eine Wasserreservoir (9) ist dabei auf derselben Seite der Polymermembran (2) wie die Flächenelektrode (5) mit dem niedrigeren elektrischen Potential vorgesehen.

## Beschreibung

Die Erfindung bezieht sich auf einen Hydrolyseur, mit einer zentralen Polymermembran, mit die Polymermembran beidseitig bedeckenden Diffuserschichten, mit die Diffuserschichten rückwärtig abstützenden, Durchbrechungen aufweisenden Flächenelektroden, mit mindestens einem Wasserreservoir, aus dem Wasser durch eine der Diffuserschichten an die Polymermembran gelangt, und mit einer Spannungsquelle, mit der eine Spannung zwischen den beiden Flächenelektroden aufbringbar ist, wobei sich die eine Flächenelektrode auf einem niedrigen elektrischen Potential als die andere Flächenelektrode befindet. Dabei bedeuten die beiden unterschiedlichen Potentiale, daß die eine Flächenelektrode mit dem Plus- und die andere Flächenelektrode mit dem Minus-Pol der Spannungsquelle verbunden ist, bzw. daß an der einen Flächenelektrode ein zumindest relativer Elektronenmangel und an der anderen Flächenelektrode ein zumindest relativer Elektronenüberschuß herrscht.

Der eingangs beschriebene bekannte Aufbau eines Hydrolyseurs entspricht im Prinzip demjenigen einer bekannten Brennstoffzelle, wobei jedoch bei einer Brennstoffzelle keine Spannungsquelle vorgesehen sein muß, weil von einer Brennstoffzelle durch Verbrennen von Wasserstoff und Sauerstoff zu Wasser ein Strom erzeugt wird, während bei einem Hydrolyseur unter Verbrauch elektrischer Leistung Wasser in Wasserstoff und Sauerstoff aufgespalten wird.

Die üblichen Polymermembranen von bekannten Brennstoffzellen, die im Prinzip in Hydrolyseure umkehrbar sind, sind auch unter der Bezeichnung PEM bekannt, was für Polymer-Elektrolyt-Membran bzw. Proton Exchange Membran steht.

Für die Aufspaltung von Wasser in Wasserstoff und Sauerstoff in einem Hydrolyseur muß das Wasser an der Seite der Polymermembran vorliegen, auf der sich die Flächenelektrode auf dem höheren elektrischen Potential befindet. Dies ist die Seite, an der der Sauerstoff gasförmig anfällt. Auf der gegenüberliegenden Seite der Polymermembran fällt der Wasserstoff gasförmig an. Gleichzeitig mit der Aufspaltung von Wasser in Sauerstoff und Wasserstoff wird aber auch dieselbe Molmenge Wasser von der Sauerstoffseite auf die Wasserstoffseite eines Hydrolyseurs transportiert. Dies heißt im Regelfall, daß das Wasserstoffgas mit Wasser befrachtet ist und beispielsweise für eine optimale Speicherung getrocknet werden muß. In jedem Fall muß das auf der Wasserstoffseite mit der Flächenelektrode auf dem niedrigeren elektrischen Potential anfallende Wasser auf die Dauer abgeführt werden, um die Funktion des Hydrolyseurs nicht zu beeinträchtigen.

Bei bekannten Hydrolyseuren der eingangs beschriebenen Art ist nur auf der Sauerstoffseite der Polymermembran ein Wasserreservoir angeordnet, d. h. auf derselben Seite der Polymermembran wie die Flächenelektrode mit dem höheren elektrischen Potential.

Der Erfindung liegt die Aufgabe zugrunde, einen Hydrolyseur der eingangs beschriebenen Art mit einem modifizierten Wasserhaushalt aufzuzeigen, der die Nachteile des Stands der Technik vermeidet.

Erfindungsgemäß wird diese Aufgabe bei einem Hydrolyseur der eingangs beschriebenen Art dadurch gelöst, daß das mindestens eine Wasserreservoir auf derselben Seite der Polymermembran wie die Flächenelektrode mit dem niedrigeren elektrischen Potential vorgesehen ist. Das bedeutet, daß sich das Wasserreservoir auf der Seite der Polymermembran befindet, an der es für die Aufspaltung des Wassers in Wasserstoff und Sauerstoff eigentlich nicht benötigt wird. Es stellt sich aber heraus, daß durch die Polymermembran ausreichende atomare Mengen von Wasser bis auf die Sauerstoffseite der Polymermembran diffundieren. Bei der Aufspaltung von Wasser in Sauerstoff und Wasserstoff durch den Hydrolyseur wird die Hälfte der bis auf die Sauerstoffseite der Polymermembran gelangten Wassermoleküle aufgespalten, während die andere Hälfte in dem bekannten Beiprozeß wieder als Wasser an der Wasserstoffseite der Polymermembran anfällt, d. h. auf der Seite des Wasserreservoirs. Es ist daher nicht erforderlich, irgendwelches Wasser, welches auf der dem Wasserreservoir gegenüberliegenden Seite der Polymermembran anfällt, abzuführen. Bei niedriger Wassertemperatur des Wasser fällt auch der Wasserstoff, der durch das Wasserreservoir austritt, mit einer relativ geringen Feuchte an. Zumindest muß bei dem neuen Hydrolyseur gegebenenfalls nur ein anfallendes Gas getrocknet werden.

Darüberhinaus weist der neue Hydrolyseur einen inneren Überlastungsschutz auf. Es kann immer nur soviel Wasser in Wasserstoff und Sauerstoff aufgespalten werden, wie es in doppelter Molmenge durch die Polymermembran auf die Sauerstoffseite diffundiert. Dies gilt zumindest für alle Ausführungsformen des neuen Hydrolyseurs, bei denen Wasser originär nur auf der Wasserstoffseite zur Verfügung gestellt wird. Bei diesen Ausführungsformen ist es bevorzugt, daß das mindestens eine Wasserreservoir nach unten durch die Polymermembran begrenzt ist. Dann drückt der hydrostatische Druck an der Unterseite des Wasserreservoirs das Wasser zumindest durch die Diffuserschicht zwischen der Flächenelektrode mit dem niedrigeren elektrischen Potential und der Polymermembran bis an die Polymermembran heran, was eine gute Wasserversorgung sicherstellt.

Der neue Hydrolyseur kann aber auch zwei Wasserreservoire aufweisen, wobei die Polymermembran mit den Diffuserschichten und den Flächenelektroden vorzugsweise seitlich zwischen den beiden Wasserreservoiren vorgesehen ist. Wenn bei dieser Anordnung durch die Aufspaltung von Wasser zusätzliches Wasser durch die Polymermembran gefördert wird, ist dies unerheblich. Dies gilt insbesondere dann, wenn die beiden Wasserreservoire durch eine Wasserleitung miteinander verbunden sind. Allerdings ist darauf zu achten, daß in der Wasserleitung eine Gassperre vorgesehen ist, die verhindert, daß Wasserstoff auf die Sauerstoffseite übertritt und umgekehrt. Bei einem derartigen Gasübertritt würde sich explosionsgefährliches Knallgas bilden.

Die die beiden Wasserreservoirs verbindende Wasserleitung ist als Überlaufleitung ausbildbar, wobei die Gassperre durch mindestens ein Schwimmerventil ausgebildet sein kann.

Die Erfindung wird im folgenden anhand von zwei Ausführungsbeispielen näher erläutert und beschrieben. Dabei zeigt:
- Figur 1: eine Ausführungsform des Hydrolyseurs mit einem Wasserreservoir,
- Figur 2: eine erste Ausführungsform des Hydrolyseurs mit zwei Wasserreservoiren,
- Figur 3: eine zweite Ausführungsform des Hydrolyseurs mit zwei Wasserreservoiren,
- Figur 4: ein Detail einer Gassperre bei der Ausführungsform des Hydrolyseurs gemäß Figur 3 in einer ersten Schnittansicht und
- Figur 5: das Detail gemäß Figur 4 in einer zweiten Schnittansicht.

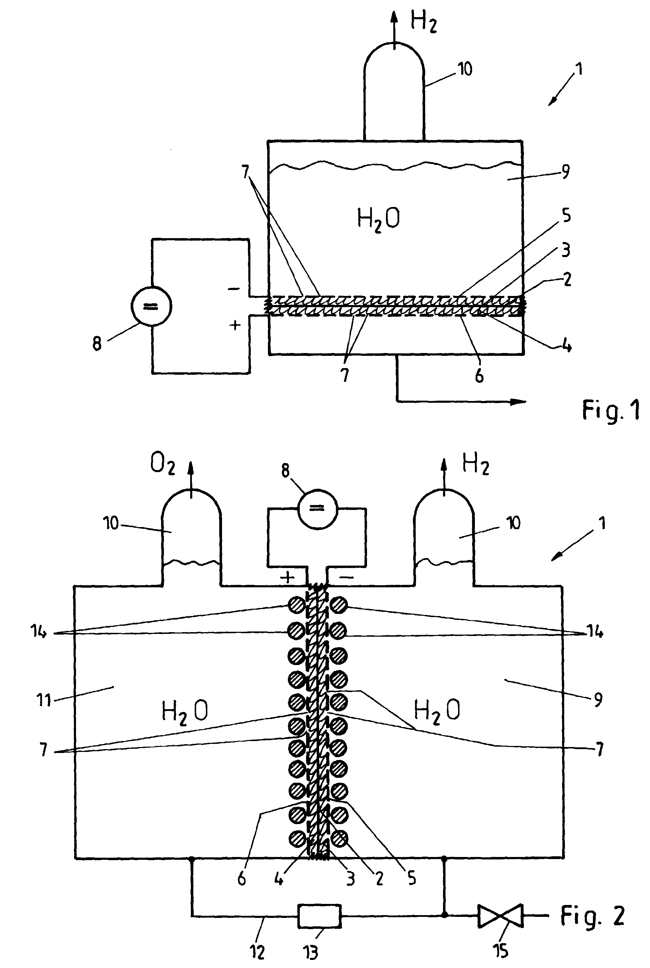

Der in Figur 1 dargestellte Hydrolyseur 1 weist eine Polymermembran 2 auf, die auf beiden Seiten mit jeweils einer Diffuserschicht 3 bzw. 4 bedeckt ist. Rückwärtig an die Diffuserschichten 3 und 4 sind Flächenelektroden 5 und 6 angedrückt, die Durchbrechungen 7 aufweisen. Eine Spannungsquelle 8 ist dazu vorgesehen, eine elektrische Spannung zwischen den Flächenelektroden 5 und 6 aufzubringen, wobei sich die Flächenelektrode 5 auf einem niedrigeren elektrischen Potential als die Flächenelektrode 6 befindet. Dies ist durch - und + Symbole angedeutet. Das Schichtenpaket aus der Polymermembran 2, den Diffuserschichten 3 und 4 und den Flächenelektroden 5 und 6 schließt bei dem Hydrolyseur 1 gemäß Figur 1 ein Wasserreservoir 9 nach unten ab. Durch den hydrostatischen Druck am unteren Ende des Wasserreservoirs 9 wird Wasser durch die Durchbrechungen 7 in der Flächenelektrode 5 in die Diffuserschicht 3 hineingedrückt. Von dort diffundiert es an die Polymermembran 2 heran und in gewissen Mengen auch durch diese hindurch. Das bis auf die der Diffuserschicht 4 zugewandte Seite der Polymermembran 2 gelangende Wasser wird durch die mit der Spannungsquelle 8 zwischen den Flächenelektroden 5 und 6 angelegte Spannung zur Hälfte in Sauerstoff und Wasserstoff aufgespalten und dabei zur anderen Hälfte auf die der Diffuserschicht 3 zugewandte Seite der Polymermembran 2 zurücktransportiert. Der Sauerstoff 2 aus dem aufgespaltenen Wasser fällt an der der Diffuserschicht 4 zugewandten Seite der Polymermembran 2 an und tritt über die Durchbrechungen 7 in der Flächenelektrode 6 aus, von wo er abgeführt werden kann. Der Wasserstoff des aufgespaltenen Wasser fällt an der der Diffuserschicht 3 zugewandten Seite der Polymermembran 2 an. Von dort diffundiert er durch die Diffuserschicht 3, bildet an der Flächenelektrode 5 Gasblasen, die durch das Wasser in dem Wasserreservoir 9 perlen. Oberhalb des Wassers in dem Wasserreservoir 9 tritt der gasförmige Wasserstoff in den Dom 10 ein und kann von dort abgeführt werden. Der Sauerstoff, der von dem Hydrolyseur 1 gemäß Figur 1 hergestellt wird, ist weitestgehend wasserfrei. Der Wasserstoff weist auch nur eine geringe Feuchte auf, da er überschüssige Feuchte ohne weiteres an das Wasser in dem Wasserreservoir 9 abgeben kann. Von der Sauerstoffseite der Polymermembran 2 muß kein überschüssiges Wasser abgeführt werden. Das durch den Beiprozeß der Aufspaltung von Wasser in Wasserstoff und Sauerstoff durch die Polymermembran 2 geförderte Wasser gelangt zurück auf die dem Wasserreservoir 9 zugewandte Seite der Polymermembran 2.

Die Ausführungsform des Hydrolyseurs 1 gemäß Figur 2 unterscheidet sich von derjenigen gemäß Figur 1 dadurch, daß das Schichtenpaket aus der Polymermembran 2, den Diffuserschichten 3 und 4 und den Flächenelektroden 5 und 6 hier seitlich an das Wasserreservoir 9 angrenzend angeordnet ist. Weiterhin ist auf der dem Wasserreservoir 9 gegenüberliegenden Seite der Polymermembran 2, d. h. der Sauerstoffseite, ein weiteres Wasserreservoir 11 vorgesehen. Das Wasserreservoir 11 steht mit dem Wasserreservoir 9 über eine Wasserleitung 12 in direktem Kontakt. Auf diese Weise kann Wasser, das durch den Beiprozeß zur Aufspaltung von Wasser in Wasserstoff und Sauerstoff über die Polymermembran 2 hinweg transportiert wird, zurückgeführt werden. In der Wasserleitung 12 ist eine Gassperre 13 vorgesehen, die das Übertreten von Wasserstoff auf die Sauerstoffseite der Polymermembran 2 verhindert und umgekehrt, damit kein explosionsgefährliches Knallgas entstehen kann. Über ein Wasseranschlußventil 15 kann die Wasserfüllung der beiden Wasserreservoire 9 und 10 ergänzt werden. Bei dem Hydrolyseur 1 gemäß Figur 2 tritt auch der gewonnene Sauerstoff durch Wasser hindurch, bis er in einem Dom 10 aufgefangen wird, aus dem heraus er abgeführt werden kann. Letztlich ist im Unterschied zu Figur 1 bei Figur 2 eingezeichnet, daß das Schichtenpaket aus der Polymermembran 2, den Diffuserschichten 3 und 4 und den Flächenelektroden 5 und 6 durch eine Abstüztkonstruktion, die hier in Form von Abstützstreben 14 angedeutet ist, auf beiden Seiten zusammengedrückt wird, um einen guten elektrischen Kontakt zwischen den Flächenelektroden 5 und 6 und den Diffuserschichten 3 und 4 sicherzustellen.

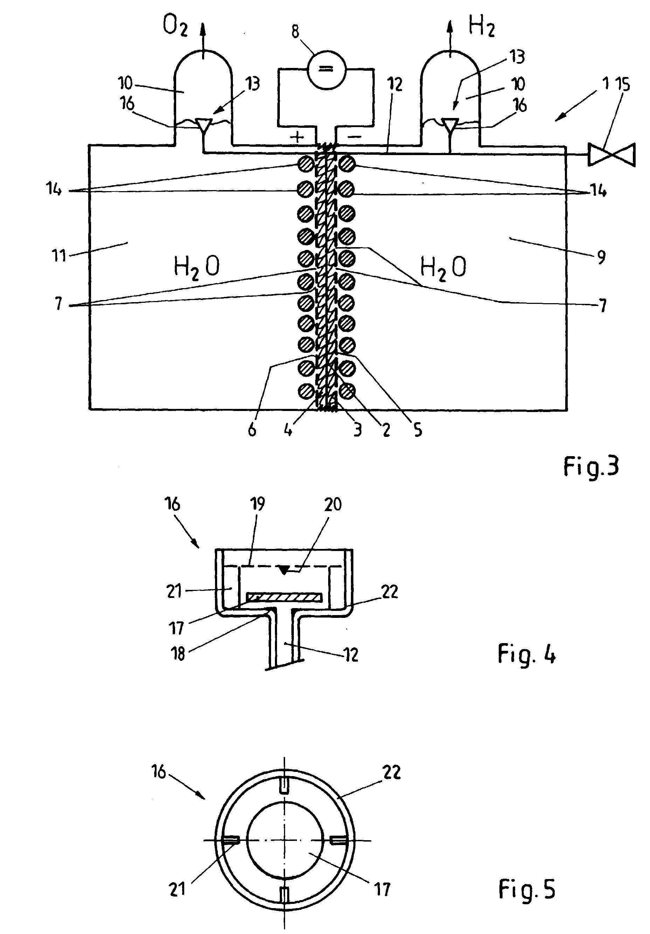

Die Ausführungsform des Hydrolyseurs 1 gemäß Figur 3 unterscheidet sich von derjenigen gemäß Figur 1 durch die Ausbildung der Gassperre 13 in der Wasserleitung 12. Gemäß Figur 3 weist die Wasserleitung 12 an jedem Ende ein Schwimmerventil 16 als Bestandteil der Gassperre 13 auf.

Eines der Schwimmerventile 16 ist in den Figuren 4 und 5 vergrößert in zwei Schnittansichten wiedergegeben. Als eigentlichen Schwimmer weist das Schwimmerventil 16 eine Schwimmerplatte 17 auf. In ihrer tiefsten Stellung liegt die Schwimmerplatte 17 an einer umlaufenden Dichtkante 18 an der Mündung der Wasserleitung 12 an. In ihrer obersten Stellung schlägt die Schwimmerplatte 17 über einen Abstandhalter 20 an einem Abdeckgitter 19 an. Dazwischen wird die Schwimmerplatte 17 durch Rippen 21 an dem Ventilgehäuse 22 des Schwimmerventils 16 geführt. Wenn sich Wasser in dem Ventilgehäuse 22 befindet und die leichter als Wasser ausgebildete Schwimmerplatte 17 anhebt, ist die Mündung der Wasserleitung 12 frei. Wenn jedoch Gas in das Ventilgehäuse 22 gelangt, und die Gefahr besteht, daß das Gas in die Wasserleitung 12 eintritt, liegt die Schwimmerplatte 17 abdichtend auf der Dichtkante 18 auf. Insbesondere bei einem Gasüberdruck in dem Dom 10 oberhalb des einen Wasserreservoirs gegenüber dem Dom oberhalb des anderen Wasserreservoirs besteht grundsätzlich die Gefahr eines Gasübertritts und damit der Knallgasbildung. Durch denselben Überdruck wird aber die Schwimmerplatte 17 des Schwimmerventils 16 dichtend an die Dichtkante 18 angedrückt.

### BEZUGSZEICHENLISTE

- 1: - Hydrolyseur
- 2: - Polymermembran
- 3: - Diffuserschicht
- 4: - Diffuserschicht
- 5: - Flächenelektrode
- 6: - Flächenelektrode
- 7: - Durchbrechung
- 8: - Spannungsquelle
- 9: - Wasserreservoir
- 10: - Dom
- 11: - Wasserreservoir
- 12: - Wasserleitung
- 13: - Gassperre
- 14: - Abstützstrebe
- 15: - Wasseranschlußventil
- 16: - Schwimmerventil
- 17: - Schwimmerplatte
- 18: - Dichtkante
- 19: - Gitter
- 20: - Abstandhalter
- 21: - Führungsrippe
- 22: - Ventilgehäuse

## Patentansprüche

1. Hydrolyseur, mit einer zentralen Polymermembran, mit die Polymermembran beidseitig bedeckenden Diffuserschichten, mit die Diffuserschichten rückwärtig abstützenden, Durchbrechungen aufweisenden Flächenelektroden, mit mindestens einem Wasserreservoir, aus dem Wasser durch eine der Diffuserschichten an die Polymermembran gelangt, und mit einer Spannungsquelle, mit der eine Spannung zwischen den beiden Flächenelektroden aufbringbar ist, wobei sich die eine Flächenelektrode auf einem niedrigeren elektrischen Potential als die andere Flächenelektrode befindet, **dadurch gekennzeichnet**, daß das mindestens eine Wasserreservoir (9) auf derselben Seite der Polymermembran (2) wie Flächenelektrode (5) mit dem niedrigeren elektrischen Potential vorgesehen ist.

2. Hydrolyseur nach Anspruch 1, **dadurch gekennzeichnet**, daß das mindestens eine Wasserreservoir (9) nach unten durch die Polymermembran (2) begrenzt ist.

3. Hydrolyseur nach Anspruch 1, **dadurch gekennzeichnet**, daß das mindestens eine Wasserreservoir (9) seitlich durch die Polymermembran (2) begrenzt ist, wobei ein weiteres Wasserreservoir (11) auf derselben Seite der Polymermembran wie die Flächenelektrode (6) mit dem höheren elektrischen Potential vorgesehen ist.

4. Hydrolyseur nach Anspruch 3, **dadurch gekennzeichnet**, daß die beiden Wasserreservoire (9, 11) durch eine Wasserleitung (12) miteinander verbunden sind.

5. Hydrolyseur nach Anspruch 4, **dadurch gekennzeichnet**, daß in der Wasserleitung (12) eine Gassperre (13) vorgesehen ist.

6. Hydrolyseur nach Anspruch 5, **dadurch gekennzeichnet**, daß die Wasserleitung (12) als Überlaufleitung ausgebildet ist.

7. Hydrolyseur nach Anspruch 6, **dadurch gekennzeichnet**, daß die Gassperre (13) mindestens ein Schwimmerventil (16) aufweist.
